# EUROPEAN PATENT SPECIFICATION

(11) **EP 0 931 696 B1**
(45) Date of publication and mention of the grant of the patent: **25.04.2001**
(21) Application number: 98830759.1
(22) Date of filing: 17.12.1998
(51) Int. Cl.: B60Q 1/072, F16C 1/12

(54) **A device for remote-adjusting the position of a movable member**
Vorrichtung zur Ferneinstellung eines beweglichen Teiles
Dispositif pour le réglage à distance d'une pièce mobile

(30) Priority: 23.01.1998 IT TO980059
(43) Date of publication of application: 28.07.1999
(73) Proprietor: Otelli Riccardo di Otelli Carlo & C. Srl, 10143 Torino (IT)
(72) Inventor: Otelli, Carlo, c/o Otelli Riccardo, 10040 Leini (Torino) (IT); Tarabuso, Mario, c/o Otelli Riccardo, 10040 Leini (Torino) (IT)
(74) Representative: Marchitelli, Mauro

(56) References cited:
- DE-A1- 3 541 678
- FR-A- 2 277 697
- GB-A- 1 530 015

## Description

The present invention relates to a device for remote-adjusting the position of a movable member.

The present invention has been developed with particular reference to automotive applications. In this field many situations exist that require adjustment of the position of a movable member which is not directly accessible from the vehicle driving position. In particular, the present invention has been developed in order to provide a device for remote-adjusting the angular orientation of the vehicle headlights. However, the present invention can be applied in any case in which there is the need to carry out the remote-adjusting of the position of a generic movable member controlled by a Bowden-type flexible transmission member. For instance, the present invention could be used for adjusting the position of a member for stiffening the lumbar region of a vehicle seat back, for adjusting the position of the air flow baffle plates in an air conditioning system, etc.

More precisely, the present invention relates to an adjustment device according to the preamble of claim 1 of the type disclosed in the French patent application No. 2277697, comprising a flexible transmission member including a cable which can slide into a sheath, connected to a control device which can be manually operated by the user. The control device disclosed in this document comprises a sheath having one end connected to a stationary support, a cable having one end connected to an actuating member movable with respect to the support, and a control element which can be manually operated for varying the position of the actuating member. The effective length of the flexible transmission member is varied by acting manually on the control device, thereby varying the position of the movable member connected at the end of said transmission member.

Remote-adjusting devices using Bowden-type transmission members are very advantageous from the point of view of the costs with respect to adjustment devices using electric actuators but have the disadvantage of an operation which is slower and more difficult for the user.

The object of the present invention is to provide an improved remote-adjustment device which is not affected by the above drawbacks and which enables the achievement of substantially the same rapidity and simplicity of operations which up to now could be obtained only with electric actuators.

According to the present invention, this object is achieved by a device having the features forming the subject of the main claim.

The present invention is essentially based on the idea of placing a stepping-up mechanism between the manually operable control element and the actuating member connected to the end of the cable. This provides a very high rapidity of response of the adjustment device, that is the possibility of obtaining relatively high variations of position of the member to be adjusted with relatively small movements of the manually operated control member. Among the advantages of the present invention, it is particularly important the fact that this rapidity of response can be obtained with an irreversible control device.

Further characteristics and advantages of the present invention will become clear in the course of the detailed description which follows, provided purely by way of non-limiting example, with reference to the appended drawings, in which:
- figure 1 is a schematic perspective view of a device according to the invention used for adjusting the orientation of vehicle headlights,
- figure 2 is a perspective view in greater detail of the control device indicated by the arrow II in figure 1,
- figure 3 is a plane view along the arrow III of figure 2,
- figures 4 and 5 are cross-sections taken along the lines IV-IV and V-V of figure 3,
- figure 6 is a cross-section taken along the line VI-VI of figure 2,
- figure 7 is a plane view of the part indicated by the arrow VII in figure 1,
- figure 8 is a cross-section taken along the line VIII-VIII of figure 7, and
- figure 9 is a cross-section taken along the line IX-IX of figure 8.

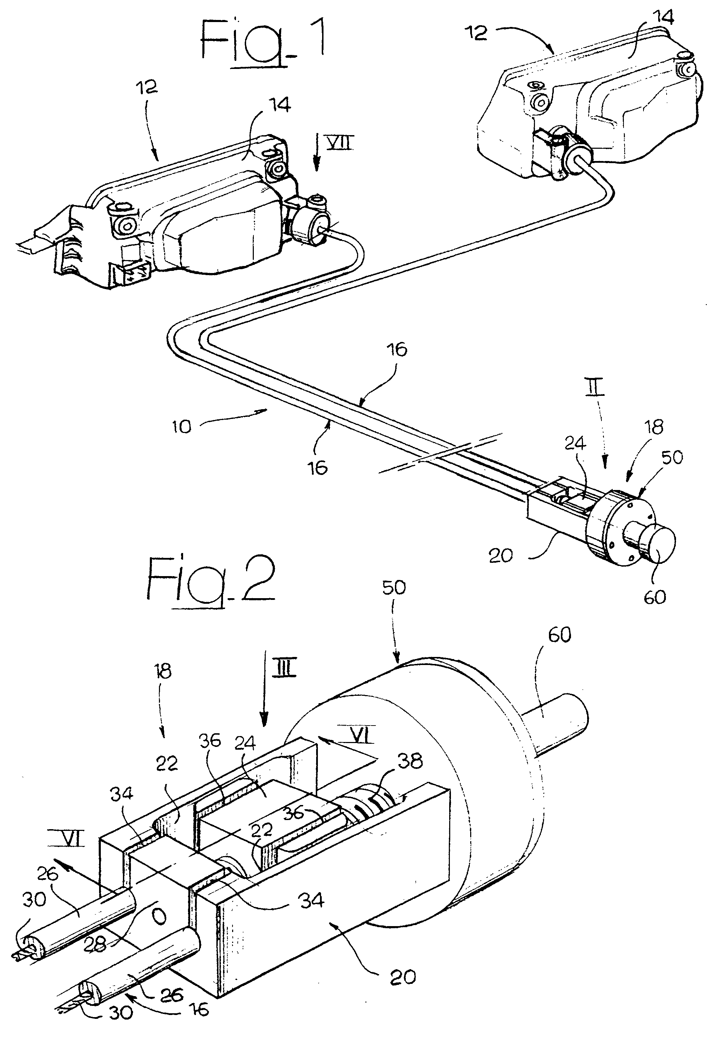

With reference to figure 1, reference numeral 10 generically indicates a device for remote-adjusting the position of a movable member. In the example shown in figure 1, the device 10 is used for adjusting the orientation of a pair of vehicle headlights 12. In a way per se known, each headlight 12 comprises a stationary structure 14 carrying a projector (not shown) which is pivotally mounted about an horizontal axis.

The adjustment device 10 comprises at least a Bowden flexible transmission member 16 connected to a control device 18. In the example shown in figure 1, two flexible transmission members 16 associated with the two headlights 12 and connected to the same control device 18 are provided.

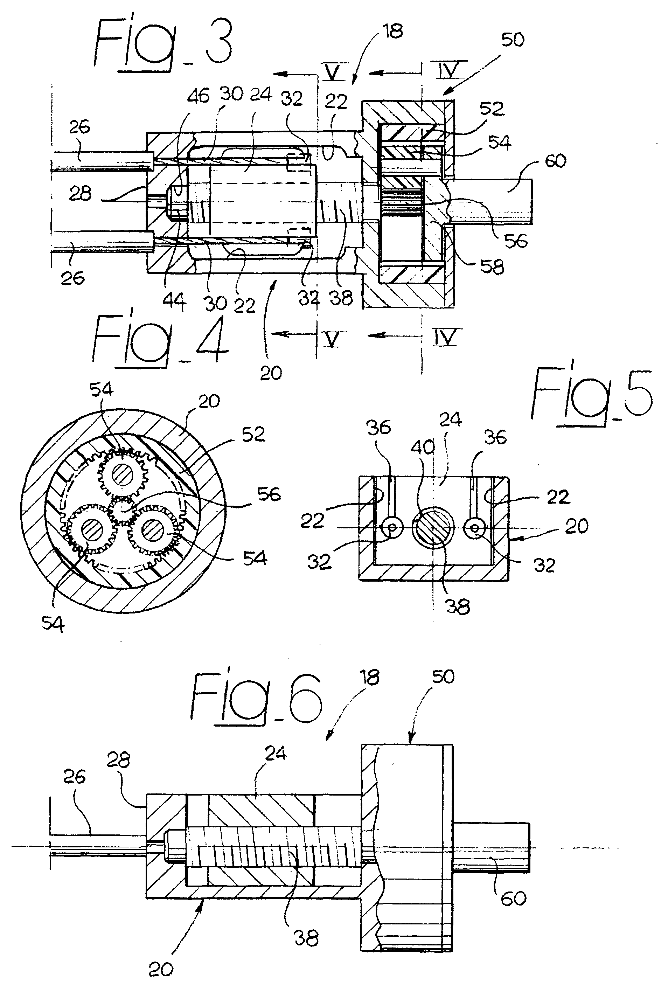

With reference to figure 2 to 6, the control device 18 comprises a stationary support 20 including two parallel walls 22 forming a guide for a movable actuating member 24. Each flexible transmission member 16 has a sheath 26 having one end which abuts against a front surface 28 of the stationary support 20. A cable 30 is slidably mounted into the sheath 26 and is provided at one of its ends with a widened head 32 which is anchored to the actuating element 24. In order to simplify the assembly, the stationary support 20 and the actuating element 24 are provided with respective open grooves 34, 36 (figures 2 and 5) which enable the cable 30 to be inserted in a direction orthogonal to its axis.

Referring always to figures 2 to 6, the control device 18 comprises a screw 38 which engages a threaded hole 40 of the actuating element 24. The longitudinal axis of the screw 38 defines the straight direction of movement of the actuating member 24. The screw 38 is preferably placed in an intermediate position between the guide walls 22 of the stationary support 20. In the example shown in the figures, the actuating element 24 has a through hole 40 and the screw 38 has an end 44 which is supported so as to be freely rotatable into a hole 46 formed in the front wall 28 of the stationary support 20.

According to the present invention, the screw 38 is rotated by means of a stepping-up mechanism 50. In the example shown in the figures, the stepping-up mechanism 50 includes step-up gears of epicycloidal type. The stepping-up device 50 has an internally toothed crown gear 52 which is fixed to the stationary support 20. Three planet gears 54 mesh with the crown gear 52 and with a sun gear 56. The sun gear 56 is fixed to the screw 38 and is preferably formed in integral form on one end of the screw. The planet gear 54 are carried by a planet gear carrier 58 fixed to a rotatable control member 60.

In operation, for adjusting the position of the movable member associated with the device 10, the user acts manually on the rotatable control member 60. The stepping-up mechanism 50 produces a rotation of the screw 38 whose angle, with respect to the rotational angle of the control member 60, is multiplied by a factor equal to the step-up rate of the mechanism 50. The step-up rate depends on the number of teeth of the gears forming the epicycloidal gearing and is determined in view of the required applications. The screw 38 has a short pitch, so that the transmission between the screw and the actuating member 24 is irreversible. This means that the position of the actuating element 24 can be varied only by means of the control member 60 whereas the forces applied on the element 24 by the cables 30 cannot move the element 24, by virtue of the irreversibility of the screw-nut coupling. The straight movement of the actuating element 24 varies the effective length of the flexible transmission member (members) associated thereto, which produces a variation of the movable member placed at the opposite end of the flexible transmission member. The gearing-up mechanism 50 makes the adjustment particularly rapid in that small movements of the rotatable control member 60 give rise to relatively great angular movements of the actuating member 24.

For the purpose of the present invention, it is not indispensable that the control member which can be operated by the user is formed by a rotatable knob. As an alternative, the control member could be formed by any other member, such as for example by a lever or slider, whose movement could be transformed by means of any known mechanism in an angular movement of the input element of the stepping-up mechanism 50.

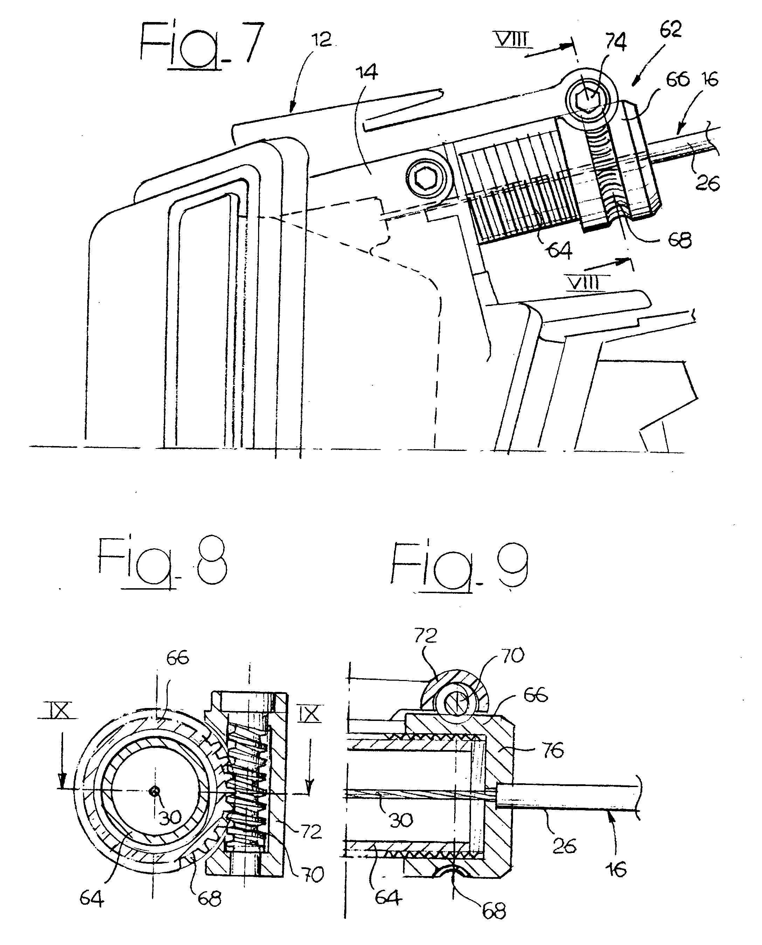

Referring now to figures 7 to 9, the device according to the present invention can be provided with a calibration mechanism 62 which is advantageous in particular when the device is used for controlling vehicle headlights. The calibration mechanism 62 comprises a stationary tubular element 64 fixed to the stationary structure 14 of the headlight 12. The tubular element 64 has an outer thread on which engages a bush 66 provided with an outer toothing 68 which engages a worm screw 70 rotatably carried by a support 72 fixed to the bush 66. The screw 70 has an engagement portion formed for example by an hexagonal recess 74 in which a screwer, for instance carried by an automatic manipulator, can be inserted. As shown in figures 7 and 8, the sheath 26 abuts against a front surface 76 of the bush 66 whereas the cable 30 extends through the tubular element 64 and is anchored to the movable member formed by the projector. Elastic means (not shown) tend to push the projector against an end of stroke element (also not shown). During the assembly of the headlights adjustment system on a vehicle, it is necessary to carry out a calibration for setting the projectors in a reference position. This calibration is carried out by rotating the worm screw 70 so as to vary the axial position of the bush 76 with respect to the tubular element 64. The adjustment mechanism 62 lends itself to carry out this initial calibration by means of automatic robots. After the projector have been correctly arranged in the reference position, the previously disclosed control device 18 enables an equal and contemporaneous variation of the headlights vertical orientation by acting on a single control member.

## Claims

1. A device for remote-adjusting the position of a movable member, comprising:
- at least one flexible transmission member (16), including a cable (30) which can slide into a sheath (26), and
- a control device (18) comprising a stationary support (20) connected to one end of the sheath (26), and an actuating element (24) movable with respect to the support (20) and connected to one end of the cable (30), and a control element (60) which can be manually operated for varying the position of the actuating element (24),
characterized in that it comprises a stepping-up mechanism (50) placed between said control element (60) and said actuating element (24), the stepping-up mechanism (50) including an epicycloidal mechanism.

2. A device according to claim 1, characterized in that said stepping-up mechanism (50) is connected to the actuating element (24) by means of an irreversible screw-nut coupling.

3. A device according to claim 1, characterized in that the stepping-up mechanism (50) is a gear mechanism.

4. A device according to claim 1, characterized in that the stepping-up mechanism (50) comprises a stationary crown gear (52) meshing with a plurality of planet gears (54) carried by a planet gear carrier (58) connected for rotation to said control member (60), the planet gears (54) meshing with a sun gear (56) fixed to a screw (38) which engages a threaded hole (40) formed in the actuating member (24).

5. A device according to claim 1, characterized in that it comprises a calibration mechanism (62) including a movable bush (66) which cooperates in abutment relationship with the end of the sheath (26) opposite to the control device (18), said bush (66) being in a threaded coupling with a stationary element (64) and being provided with a toothing (68) which meshes with a worm screw (70) provided with means (64) for engagement with a screwing member.

## Patentansprüche

1. Vorrichtung mit der die Position eines beweglichen Bauteils fern-eingestellt werden kann, bestehend aus:
mindestens ein bewegliches Übertragungsglied (16), einschließlich eines Kabels (30), das in eine Ummantelung (26) rutschen kann, und
eine Steuervorrichtung (18) bestehend aus einer festen Auflage (20), die an ein Ende der Ummantelung (26) befestigt ist und ein Antriebselement (24), dass in bezug auf die Auflage (20) beweglich ist und an einem Ende des Kabels (30) befestigt ist, und ein Kontrollelement (60), das manuell betrieben wird, um die Position des Antriebselements (24) zu verändern,
es zeichnet sich dadurch aus, dass es aus einem Hochschalt-Mechanismus (50) besteht, der zwischen dem o.g. Steuerelement (60) und dem o.g. Antriebselement (24) untergebracht ist.

2. Eine Vorrichtung entsprechend Patentanspruch 1, die sich dadurch auszeichnet, dass der o.g. Hochschalt-Mechanismus (50) über eine nicht umkehrbare Schraubenmutter-Verbindung an das Antriebselement (24) angeschlossen ist.

3. Eine Vorrichtung entsprechend Patentanspruch 1, die sich dadurch auszeichnet, dass der o.g. Hochschalt-Mechanismus (50) ein Getriebe-Mechanismus ist und der Hochschalt-Mechanismus (50) einen epizykloidischen Mechanismus einschließt.

4. Eine Vorrichtung entsprechend Patentanspruch 1, die sich dadurch auszeichnet, dass der o.g. Hochschalt-Mechanismus (5.0) ein feststehendes Planrad (52) einschließt, das mit einen Vielzahl von Planeträdern (54) ineinandergreift, die von einem Planetradträger (58) getragen werden, der zur Rotation an das o.g. Steuerelement (60) angeschlossen ist und die Planeträder (54) mit einem an eine Schraube (38) befestigtem Planetengetriebe (56) ineinandergreifen. Die Schraube (38) rastet in eine Gewindebohrung (40) im Antriebselement (24) ein.

5. Eine Vorrichtung entsprechend Patentanspruch 1, die sich dadurch auszeichnet, dass sie einen Mess-Mechanismus (62) mit einer beweglichen Buchse (66) einschließt, die in einem angrenzenden Bezug mit dem Ende der Ummantelung (26) gegenüber der Steuervorrichtung (18) zusammenarbeitet, wobei sich die o.g. Buchse (66) mit einem feststehenden Element (64) in einer Schraubverbindung befindet und mit einer Verzahnung (68) ausgerüstet ist, die mit einem Schraubgewinde (70) ineinandergreift, das mit Hilfsmitteln (64) zum Einrasten mit einem Schraubelement ausgerüstet ist.

## Revendications

1. Un dispositif pour télé-régler la position d'un membre mobile, comprenant :
- au moins un membre de transmission flexible (16) comprenant un câble (30) pouvant glisser dans une gaine (26), et
- un dispositif de commande (18) comprenant un support fixe (20) relié à une extrémité de la gaine (26), et un actionneur (24) mobile par rapport au support (20) et relié à une extrémité du câble (30), et un élément de commande (60) pouvant être actionné manuellement pour modifier la position de l'actionneur (24),
caractérisé par le fait qu'il comprend un mécanisme de mise en circuit progressive (50) placé entre ledit élément de commande (60) et ledit actionneur (24), le mécanisme de mise en circuit progressive (50) comprenant un mécanisme épicycloïdal.

2. Un dispositif selon la revendication 1, caractérisé par le fait que ledit mécanisme de mise en circuit progressive (50) est relié à l'actionneur (24) au moyen d'un accouplement vis-écrou irréversible.

3. Un dispositif selon la revendication 1, caractérisé par le fait que ledit mécanisme de mise en circuit progressive (50) est un mécanisme à engrenages.

4. Un dispositif selon la revendication 1, caractérisé par le fait que ledit mécanisme de mise en circuit progressive (50) comprend une couronne dentée fixe (52) engrenant avec une pluralité d'engrenages planétaires (54) supportés par un porte-engrenages planétaires (58) relié pour la rotation audit membre de commande (60), les engrenages planétaires (54) engrenant avec un engrenage solaire (56) fixé à une vis (38) qui s'engage dans un trou fileté (40) formé dans l'actionneur (24).

5. Un dispositif selon la revendication 1, caractérisé par le fait qu'il comprend un mécanisme de calibrage (62) comprenant une bague mobile (66) qui coopère en relation de butée avec l'extrémité de la gaine (26) opposée au dispositif de commande (18), ladite bague (66) étant en accouplement fileté avec un élément fixe (64) et étant pourvue d'une denture (68) qui s'engrène avec une vis sans fin (70) pourvue de dispositifs (64) d'engagement avec un membre de vissage.
